Europäisches Patentamt

European Patent Office

Office européen des brevets

(19)

(11) **EP 0 519 501 B1**

(12) **EUROPEAN PATENT SPECIFICATION**

(45) Date of publication and mention
of the grant of the patent:
**29.04.1998 Bulletin 1998/18**

(51) Int Cl.⁶: **G05B 13/02**, H02J 3/18

(21) Application number: **92110404.8**

(22) Date of filing: **19.06.1992**

(54) **A control method using neural networks and a voltage/reactive power controller for a power system**

Leistungssteuerungssystem mit Anwendung von Neuronalnetzwerken und einem Spannungs-/Blindleistungsregler

Méthode de contrôle d'un système d'alimentation utilisant des réseaux neuronaux et un contrôleur de tension/puissance réactive

(84) Designated Contracting States:
**CH DE GB LI SE**

(30) Priority: **20.06.1991 JP 174735/91**

(43) Date of publication of application:
**23.12.1992 Bulletin 1992/52**

(73) Proprietor: **MITSUBISHI DENKI KABUSHIKI KAISHA
Tokyo 100 (JP)**

(72) Inventors:
• **Goda, Tadahiro, Mitsubishi Denki K.K.
1-chome Hyogo-ku, Kobe-shi, Hyogo (JP)**
• **Kyomoto, Sumie, Mitsubishi Denki K.K.
1-chome Hyogo-ku, Kobe-shi, Hyogo (JP)**
• **Kojima, Yasuhiro,
c/o MITSUBISHI DENKI K. K. Ind.
8-chome, Amagasaki-shi Hyogo (JP)**
• **Izui, Yoshio, c/o MITSUBISHI DENKI K. K. Ind.
8-chome, Amagasaki-shi Hyogo (JP)**

(74) Representative: **Sajda, Wolf E., Dipl.-Phys. et al
MEISSNER, BOLTE & PARTNER
Widenmayerstrasse 48
80538 München (DE)**

(56) References cited:
**EP-A- 0 508 202**

• **PROCEEDINGS OF THE 1989 AMERICAN CONTROL CONFERENCE, 21 - 23 JUNE 1989, PITTSBURGH US pages 884 - 889 L. G. KRAFT ET AL. 'A comparison of CMAC neural network and traditional adaptive control systems'**
• **1991 IEEE INTERNATIONAL JOINT CONFERENCE ON NEURAL NETWORKS, 18 - 21 NOVEMBER 1991, SINGAPORE, vol.3 pages 2128 - 2133 M. KHALID ET AL. 'A neural network based control scheme with an adaptive neural model reference structure'**
• **1991 IEEE INTERNATIONAL JOINT CONFERENCE ON NEURAL NETWORKS, 18 - 21 NOVEMBER 1991, SINGAPORE, vol.2 pages 1336 - 1342 G. NEILY ET AL. 'Joint VAR controller implemented in an artificial neural network environment'**
• **IEEE INTERNATIONAL CONFERENCE ON NEURAL NETWORKS, 24 - 27 JULY 1988, SAN DIEGO US pages 595 - 602 A. GUEZ ET AL. 'A neuromorphic controller with a human teacher'**
• **ELEKTROTECHNISCHE ZEITSCHRIFT, vol.111, no.22, November 1990, BERLIN DE pages 1178 - 1185 G. WILD 'Digitale Regelung der statischen Kompensatoren Kemps Creek'**
• **IEEE Control systems magazine, vol.8, n.2, 4/88, pp.17-21**
• **IEEE Control systems magazine, vol.10, n.3, 4/90, pp.44-48**

## Description

The present invention relates to a controller and a control method effective for controlling a control object which rarely has static characteristics because it is a large-scale system or includes non-linearity, or a control object which cannot be well controlled by the conventional controller. Such objects include for example the voltage/reactive-power of a power system, an automatically moving robot, a large-scale industrial plant, a generator, an automatically navigator of a ship or jets of fuel in an internal combustion engine.

The article by Psaltis et al. in IEEE Control Systems Magazine, Vol. 8, No. 2, April 1988, pages 17 to 21 discloses a multi-layered network processor used to control an industrial plant. A neuro controller is connected in parallel to the plant and subjected to a training method, wherein the learning architecture is sub-divided into various levels of priority. An error-back propagation technique is used to derive appropriate inputs to the plant to obtain the desired response.

The article by Kraft et al. in Proceedings of the American Control Conference, June 21 to 23, 1989, Pittsburg, USA, pages 884 to 889 discloses a neuro network control method. A self-tuning regulator is provided as a feedback system and makes use of a least square error modelling technique to determine a model of the system to be controlled. Results are shown for the system being linear and free of noise, for the case that noise is added to the measurements and for a non-linear system.

The article of Guez et al. in IEEE Conference on Neuro Networks, July 24 to 27, 1988, San Diego, USA, pages 595 to 602 discloses a neuro controller having a human teacher. The dynamic model of a system is supplemented by human teacher training data to optimize the learning process of the neuro controller.

The article of F.C. Chen in IEEE Control Systems Magazine, Vol. 10, No. 3, April 1990, pages 44 to 48 discloses a back-propagation neuro network applied to a non-linear self-tuning tracking problem. The back propagation network comprises an additional one-layer of non-linear processing elements. The incoming signals and output signals are summed to become processing elements of the non-linear component. The combined neuro network offers the possibility of linearizing a non-linear system.

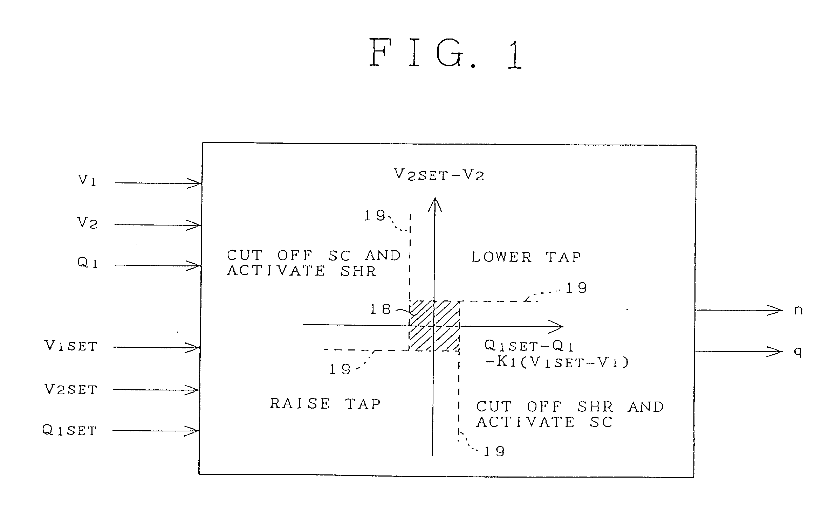

Fig. 1 is a conceptual diagram showing another control technique adopted by the conventional voltage/ reactive-power controller described in Report 946 with the title "Development of a Voltage/Reactive-Power Controller" disclosed by M. Suzuki et al. in a national convention of the Society of Electrical Engineers of Japan which was held in the year of 1987. Reference numeral 18 shown in the figure is a dead zone in the central area of coordinate axes whereas reference numerals 19 each denote an operation-changeover line extended from the dead zone 18 in one of the four directions.

The principle of operation of the conventional voltage voltage/reactive-power controller is now described. A voltage/ reactive-power controller adopting the conventional control technique has a control plane with a pattern approximating the characteristics of a power system which are established with relations among the primary and secondary voltages $V_1$ and $V_2$ and the primary reactive power $Q_1$ of its transformer used as a base. The voltage/reactive-power controller sustains the primary and secondary voltages $V_1$ and $V_2$ and the primary reactive power $Q_1$ of the transformer at their target values by moving the tap of the load tap-changer up and down or controlling the input switching of a shunt reactor (SHR) and a synchronous condenser (SC) serving as a phase adjuster based on the pattern on the control plane shown in Fig. 1.

In the conventional control technique as described above, the control characteristics are much affected by the pattern on the control plane set in the controller. It is difficult, on the other hand, to properly set a pattern on the control plane. It is therefore hard to provide satisfactory control characteristics. In addition, since the effect of moving the tap up and down and controlling the input switching of the shunt reactor (SHR) and the synchronous condenser (SC) is not smooth, the conventional control technique gives rise to a problem that hunting or the like may result if the dead zone 18 is not set properly.

It is an object of the present invention to provide a control technique that allows control characteristics to be implemented by taking dynamic characteristics of a control object into consideration without carrying out a cumbersome task of setting of a pattern on the control plane.

It is another object of the present invention to provide a voltage/reactive-power controller that can control the voltages and reactive power at high speed, so that they remain at suitable values without the need to approximate the characteristics of the power system.

A control method is provided by the present invention as defined in claim 1.

In this control technique, the neural network learns control characteristics based on the characteristics of the control object by adopting a learning algorithm before implementing control actions on the control object. Accordingly, the control technique can be applied to an object even if the object would result in unsatisfactory control characteristics should the conventional controller be used or even if it is difficult to grasp the characteristics of the object or to determine control rules of the apparatus in advance.

In addition, A voltage/reactive-power controller is provided by the present invention as defined in claim 3. The neuro controller controls the power system after letting its neural network finish a learning process to make the output of the neuro power-system simulator match the input of the neuro controller. As a result, a voltage/reactive-power controller for a power system capable of controlling the voltages and the reactive power to appropriate values at a high speed without the need to approximate the characteristics of the power system can thus be implemented.

Fig. 1 is a conceptual diagram showing the conventional control technique.

Fig. 2 is a conceptual diagram showing a first learning phase of a control technique of the first embodiment according to the present invention.

Fig. 3 is a conceptual diagram showing a second learning phase of a control technique of the first embodiment according to the present invention.

Fig. 4 is a conceptual diagram showing an operating state of the control technique.

Fig. 5 is a diagram showing the configuration of a typical recurrent neural network used in the controller.

Fig. 6 is explanatory diagrams showing the waveforms of inputs and outputs of typical operation carried out by a controller.

Fig. 7 is a diagram showing the configuration of a typical neural network for the operation.

Fig. 8 is a conceptual diagram showing an operating state of a controller implemented by a second embodiment.

Fig. 9 is a conceptual diagram showing look-ahead control of a control technique adopted by a third embodiment.

Fig. 10 is a conceptual diagram showing a learning phase of a control technique adopted by a fourth embodiment.

Fig. 11 is a conceptual diagram showing an operating state of a controller implemented by the fourth embodiment.

Fig. 12 is a conceptual diagram showing an operating state of a controller implemented by a fifth embodiment.

Fig. 13 is conceptual diagrams for a sixth embodiment.

Fig. 14 is a diagram showing the configuration of a neuro power-system simulator.

Fig. 15 is a diagram showing the configuration of a neuro controller.

Fig. 16 is a diagram showing the configuration of a neural network at a second learning phase.

Fig. 17 is an explanatory diagram showing control effects produced by the sixth embodiment.

Fig. 18 is an explanatory diagram showing output-error curves relative to target values of control operations.

Fig. 19 is a conceptual diagram of a seventh embodiment according to the present invention.

Fig. 20 is a conceptual diagram of an eighth embodiment according to the present invention.

Fig. 21 is a conceptual diagram of a ninth embodiment according to the present invention.

Fig. 22 shows conceptual diagrams of a tenth embodiment according to the present invention.

Fig. 23 is a conceptual diagram of an eleventh embodiment according to the present invention.

Referring to the diagrams described above, embodiments according to the present invention are described as follows.

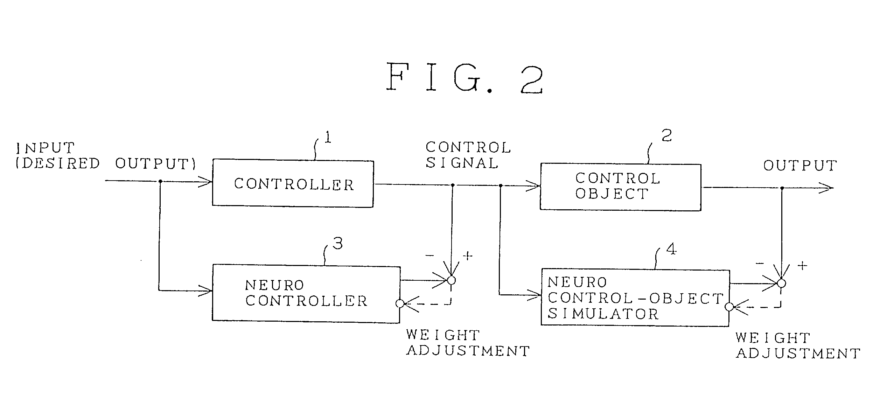

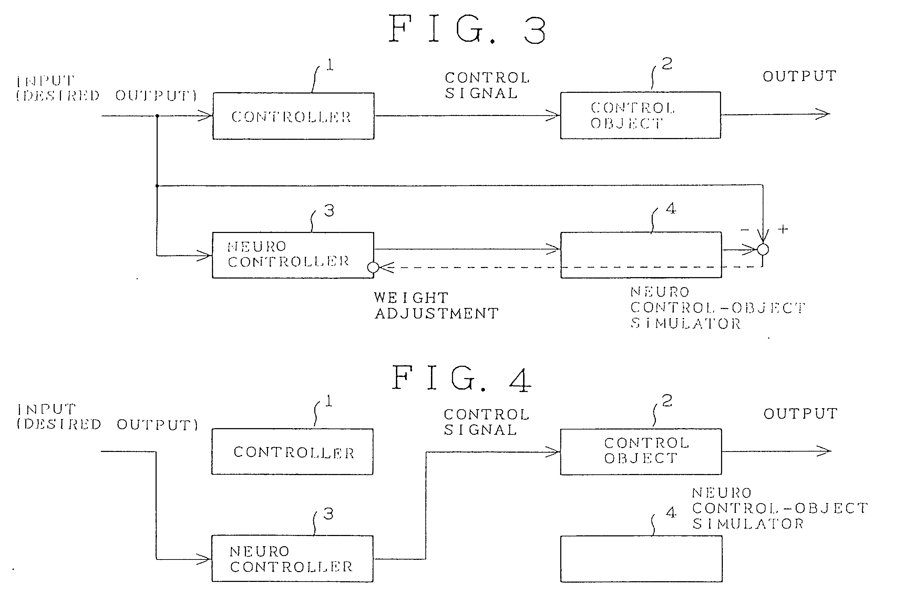

Fig. 2 to 4 are conceptual diagrams used for explaining a control technique implemented by a first embodiment in accordance with the present invention. Fig. 2 and 3 are conceptual diagrams showing a first and second learning phases respectively whereas Fig. 4 is a conceptual diagram showing an operating state of the controller after the completion of the two learning phases. As such, the learning process is divided into two stages.

Numeral references 1 shown in Fig. 2 to 4 each denote the conventional controller such as a voltage/ reactive-power controller. Numeral references 2 are each a real control object controlled by the conventional controller 1. Numeral references 3 each denote a neuro controller which implements functions of the conventional controller 1 by means of a neural network. Numeral references 4 are each a neuro control-object simulator which is also made up of a neural network to behave like the control object 2.

Next, the principle of operation is described. At the first learning phase, i.e. pre-learning phase shown in Fig. 2, the neuro controller 3 and the neuro control object simulator 4, which are each made up of a neural network as described above, learn dynamic characteristics of the conventional controller 1 and the real control object 2 respectively. At the first learning phase, the same input is supplied to both the conventional controller 1 and the neuro controller 3. Similarly, the same input is supplied to both the real control object 2 and the neuro control-object simulator 4. At that time, the neuro controller 3 and the neuro control-object simulator 4 adjust their weights of connection among the neural nodes therein so that the output of the neuro control-object simulator 4 matches that of the real control object 2. Typically, the aforementioned algorithm provided by Williams et al. can be used as a rule according to which the weights of connection among the neural nodes are adjusted.

An algorithm described in a paper with the title "A Learning Algorithm for Continually Running Fully Recurrent Neural Networks" presented by R. J. Williams et al. and disclosed in Issues 1 and 2 of Neural Computation of 1989 is used as rules according to which the weights are adjusted.

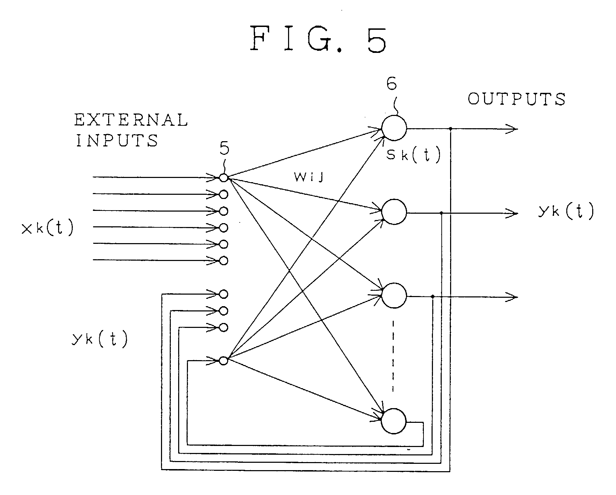

Let us think of a recurrent neural network shown in Fig. 5. As shown in the figure, external inputs $x_k(t)$ are supplied from the outside world to an input layer 5. $y_k(t)$ is feedbacks output by neural nodes 6. Let sets of these inputs and outputs index k be U and I respectively. Overall inputs are defined by Equation (1) as follows:

$$z_k(t) = \begin{cases} x_k(t) & \text{if } k \in I \\ y_k(t) & \text{if } k \in U \end{cases} \tag{1}$$

The input to the k-th neuron (neural node) $s_k(t)$ is given by Equation (2) and its output $y_k(t+1)$ at next time step is expressed by Equation (3) as follows:

$$s_k(t) = \sum_{\ell \in U \cup I} w_{k\ell} z_\ell(t) \tag{2}$$

$$y_k(t+1) = f_k[s_k(t)] \tag{3}$$

where $w_{k\ell}$ is a weight of junction between the k-th neuron and an l-th neuron and $f_k$ is an input-output relation.

Let us define a set of k in which a target value $d_k(t)$ for the output $y_k(t)$ exists as $T(t)$. An error function $e_k(t)$ can then be defined by Equation (4) as follows:

$$e_k(t) = \begin{cases} d_k(t) - y_k(t) & \text{if } k \in T(t) \\ 0 & \text{otherwise} \end{cases} \tag{4}$$

$J(t)$, an evaluation function, is

$$J(t) = \frac{1}{2} \sum_{k \in U} [e_k(t)]^2 \tag{5}$$

If the weights of junction are to be changed from time to time, the amount of change is found by using the steepest-drop law given by Equation (6) as follows:

$$\Delta w_{ij}(t) = -\alpha \frac{\partial J(t)}{\partial w_{ij}} \tag{6}$$

where $\alpha$ is a positive learning constant.

Here, the partial-differential term on the right side of Equation (6) can be modified into the right side of Equation (7). Computing the partial-differential term on the right side of Equation (7) yields the right side of Equation (8), where $\delta ij$ is Kronecker's delta which has a value of "1" for $i = k$ and "0" in other cases.

$$\frac{\partial J(t)}{\partial w_{ij}} = -\sum_{k \in U} e_k(t) \frac{\partial y_k(t)}{\partial w_{ij}} \tag{7}$$

$$\frac{\partial y_k(t+1)}{\partial w_{ij}} = f'_k[s_k(t)] \left[ \sum_{\ell \in U} w_{k\ell} \frac{\partial y_\ell(t)}{\partial w_{ij}} + \delta ik\, z_j(t) \right] \tag{8}$$

An initial condition is expressed by Equation (9) as follows:

$$\frac{\partial y_k(t_0)}{\partial w_{ij}} = 0 \qquad (9).$$

Substituting "p" for the partial-differential terms of Equations (8) and (9) gives Equations (10) and (11) respectively and substituting Equation (7) for the partial-differential term of Equation (6) yields Equation (12) as follows:

$$P_{ij}^k(t+1) = f'_k[s_k(t)][\sum_{\ell \in U} w_{k\ell} P_{ij}^\ell(t) + \delta_{ik} z_j(t)] \qquad (10)$$

$$P_{ij}^k(t_0) = 0 \qquad (11)$$

$$\Delta w_{ij}(t) = \alpha \sum_{k \in U} e_k(t) P_{ij}^k(t) \qquad (12)$$

At the first learning phase, the neuro controller 3 and the neuro control object simulator 4 learn the dynamic characteristics of the conventional controller 1 and the real control object 2 respectively also using the algorithm described above. At the second learning phase, the output of the neuro controller 3 which have gone through the first learning phase is connected to the input of the neuro control-object simulator 4 as shown in Fig. 3 to form a single overall recurrent neural network. The input and output of the overall neural network are compared to each other and the neuro controller 3 adjusts the weights of connection among neural nodes in its neural network so that the input agrees with the output. In this way, the overall recurrent neural network goes through the second learning phase.

As the second learning phase is completed, the neuro controller 3 is connected to the real control object 2 as shown in Fig. 4. In this arrangement, the real control object 2 is controlled by the neuro controller 3 instead of the conventional control apparatus 1.

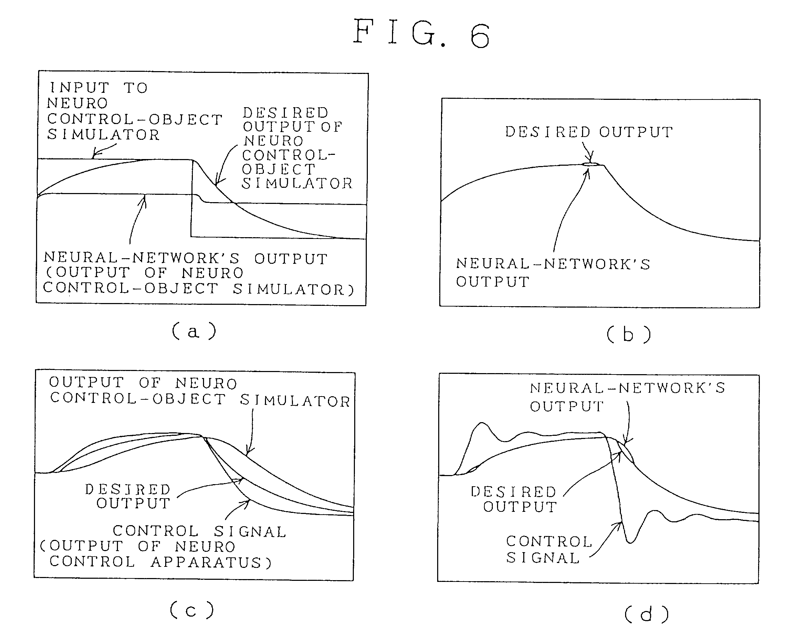

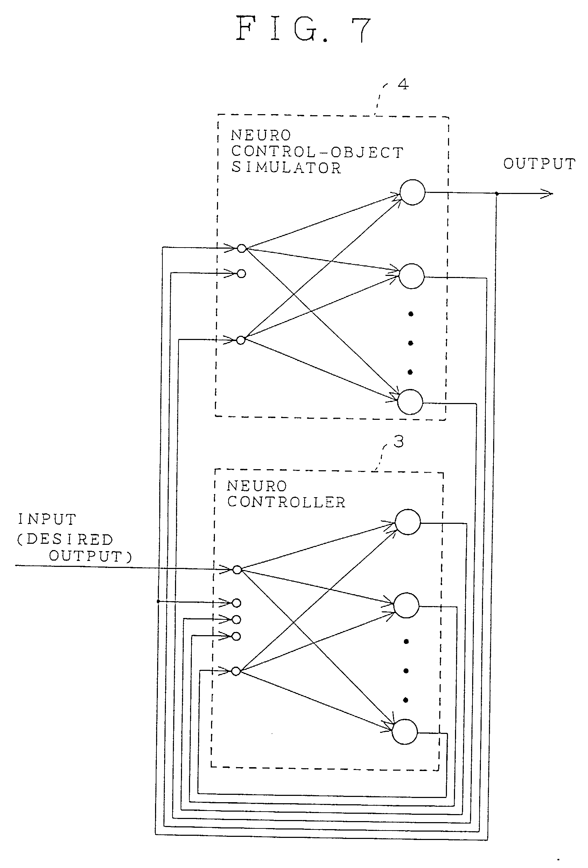

Fig. 6 is explanatory diagrams showing waveforms of inputs and outputs in typical simple operation to which the control technique described above is applied. The configuration of a neural network for the operation is shown in Fig. 7. In this case, the control object 2 has a first-order lagging characteristic. That is to way, the output of the control object 2 approaches a step input like an exponential-function curve as shown in Fig. 6(a).

In this control system, first of all, the neuro control-object simulator 4 learns the first-order lagging characteristic of the control object 2 at the first learning phase. Output waveforms at this learning phase are shown in Fig. 6(b). Next, at the second learning phase, the neuro control-object simulator 4, which has gone through the first learning phase, is connected to the neuro controller 3 completing no particular learning phase. The neuro controller 3 then adjusts the weights of connection among its neural nodes so that the output of the neuro control-object simulator 4 or the output of the neural network matches the input to the neuro controller 3 or the desired output. Waveforms during this adjustment of the weights are shown in Fig. 6(c).

After the second learning phase has been completed, the output of the neural network almost matches the desired output as is seen in Fig. 6(d). Also at that time, the relation between the input and the output (the control signal) of the neuro controller 3 becomes the same as the relation between the output and the input of the neuro control-object simulator 4. This is because characteristics opposite to those of the neuro control-object simulator 4 have been created in the neural-network controller 3.

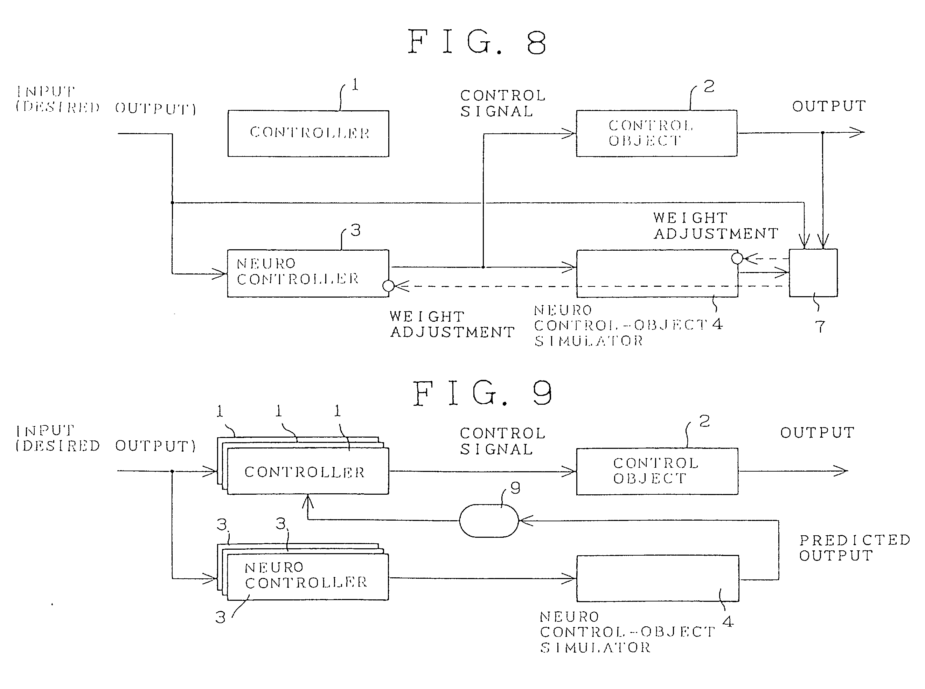

Fig. 8 is a conceptual diagram showing an operating state of a controller implemented by a second embodiment in accordance with the present invention. As described in the explanation of the first embodiment, by connecting the neuro controller 3 to the real control object 2, the latter can be controlled by using the former instead of the conventional controller 1. In this arrangement, the outputs of the real control object 2 and the neuro control-object simulator 4 are kept track of by the monitor 7. A difference between both the outputs exceeding a predetermined value is regarded as a variation in dynamic characteristic of the real control object 2. When the monitor 7 detects such a difference, the neuro controller 3 and the neuro control-object simulator 4 are requested to re-learn the variation in dynamic characteristic of the real control object 2 in accordance with, typically, the algorithm provided by Williams et al. In this way, a control technique can thus be implemented for controlling the control object 2 with the dynamic characteristics thereof taken into consideration.

Fig. 9 is a conceptual diagram showing look-ahead control of the control technique implemented by a third embodiment in accordance with the present invention. The operation of the neural network after a learning process is carried out at a very high speed. Before the real control object 2 starts operation, the neuro controller 3 and the neuro control-object simulator 4 may simulate the behaviour of the real control object 2 through some control examples. A deciding unit 9 selects one among the control examples that produces the best behaviour of the real control object 2, switching the desired output from the neuro controller 3 to the conventional controller 1 which is then used for controlling the real control object 2. By utilizing parallel computers, the speed of the control processing can be substantially increased.

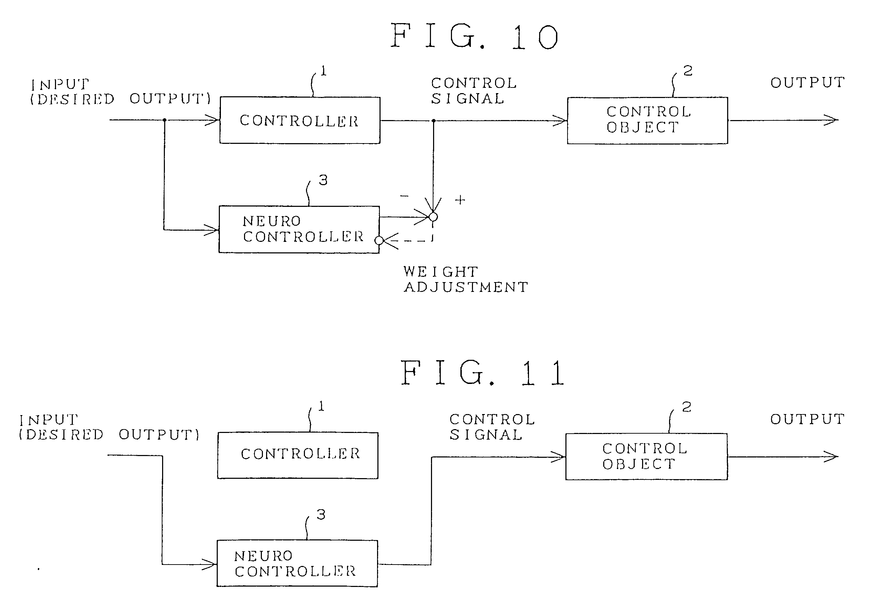

Fig. 10 is a conceptual diagram showing a learning phase of a fourth embodiment according to the present invention. Fig. 11 is a conceptual diagram showing an operating state of the control apparatus having completed the learning phase. Reference numeral 1 shown in Fig. 10 or 11 are the conventional controller which implement control based on a pattern shown in Fig. 1. Reference numeral 2 denotes a control object whereas reference numeral 3 is a controller made of a neural network.

Next, the principle of operation of the embodiment is described. At the learning phase shown in Fig. 10, the neuro controller 3 learns dynamic characteristics of the conventional controller 1. At the phase for learning the dynamic characteristics, the same input is applied to both the conventional controller 1 and the neuro controller 3. At that time, the neuro controller 3 adjusts weights of connection among its neural nodes so as to make its output match that of the conventional controller 1.

At the learning phase, the neuro controller 3 learns the dynamic characteristics of the conventional controller 1 typically in accordance with the algorithm provided by Williams et al. As the learning phase is completed, the dynamic characteristics of the neuro controller 3 become the same as those of the conventional controller 1. By connecting the neuro controller 3 to the real control object 2 as shown in Fig. 11, the latter can thus be controlled by the former.

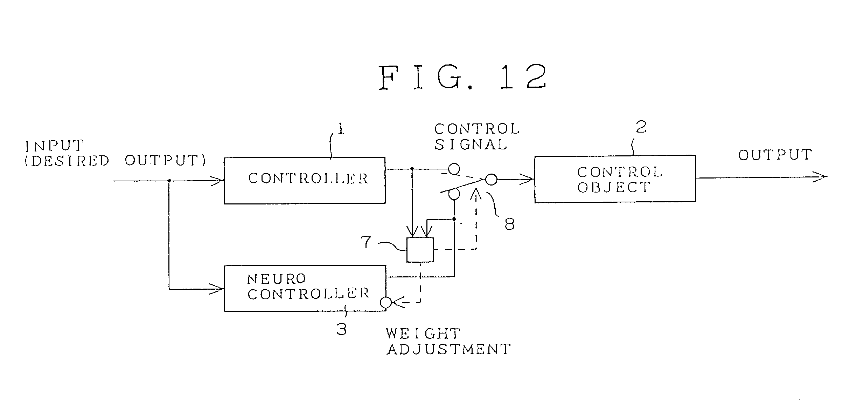

Fig. 12 is a conceptual diagram showing an operating state in which a control technique embraced by a fifth embodiment according to the present invention is executed. As shown in the figure, when a neuro controller 3 is controlling a real control object 2, a target output is also supplied to a conventional controller 1 as well. The neuro controller 3 then adjusts the weights of connection using typically the aforementioned algorithm provided by Willliams et al. until the output of the neuro controller 3 matches that of the conventional controller 1. If the difference in output between the former and the latter exceeds a predetermined value, a monitor 7 detects this phenomenon, actuating a switch 8 so as to connect the real control object 2 to the conventional controller 1. In this way, the neuro controller 3 can learn the dynamic characteristics of the conventional controller 1 while controlling the real control object 2 without the need for going through the learning phase in advance.

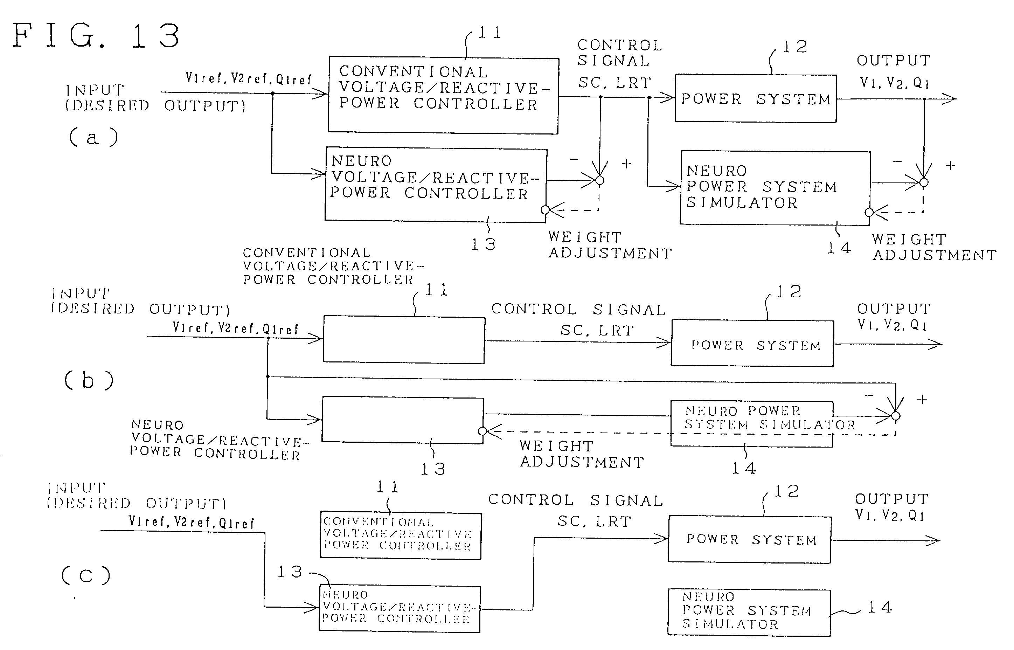

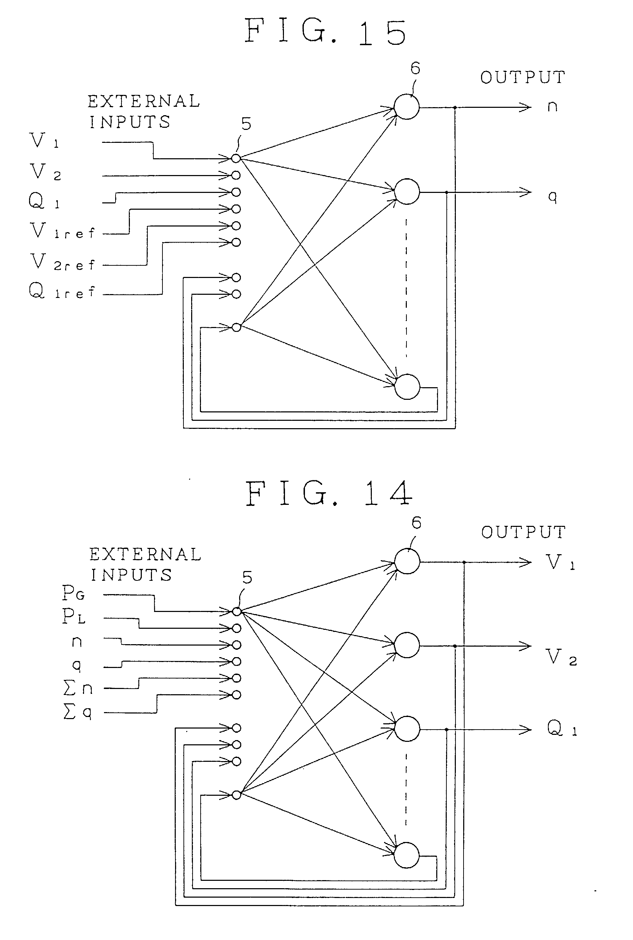

Fig. 13 are conceptual diagrams used for explaining the principle of operation of a voltage/reactive-power controller which is implemented by a sixth embodiment in accordance with the present invention for controlling a power system. Fig. 13(a), (b) and (c) show first and second learning phases and an operating state respectively. Reference numerals 11 shown in the figure each denote the conventional voltage/reactive-power controller. Reference numerals 14 is each a neuro power-system simulator made up of a neural network for simulating a power system 12. Fig. 14 is a diagram showing a typical configuration of the neuro power-system simulator 14. Note that the recurrent neural network shown in Fig. 5 is used to form the configuration of Fig. 14.

In addition to the control signals (n) and (q) for moving up and down the tap of the tap-changer and for closing and opening the phase adjusting facilities (SC) and (SHR), the active power $(P_G)$ of the generator indicating the state of the power system 12, the active power $(P_L)$ of the load, a total $(\Sigma n)$ of tap values on the transformer's primary winding and a total $(\Sigma q)$ of input quantities of the phase adjusting facilities at power-system sites other than the site of this power system controlled by the neural network are supplied to the neuro power-system simulator 14 as external inputs. Outputs given by the neuro power-system simulator 14 are the values $V_1$, $V_2$ and $Q_1$ of the primary and secondary voltages and the reactive power of the transformer which are control results produced thereby. Note that the configuration shown in Fig. 15 will also work well enough for the neuro controller 13.

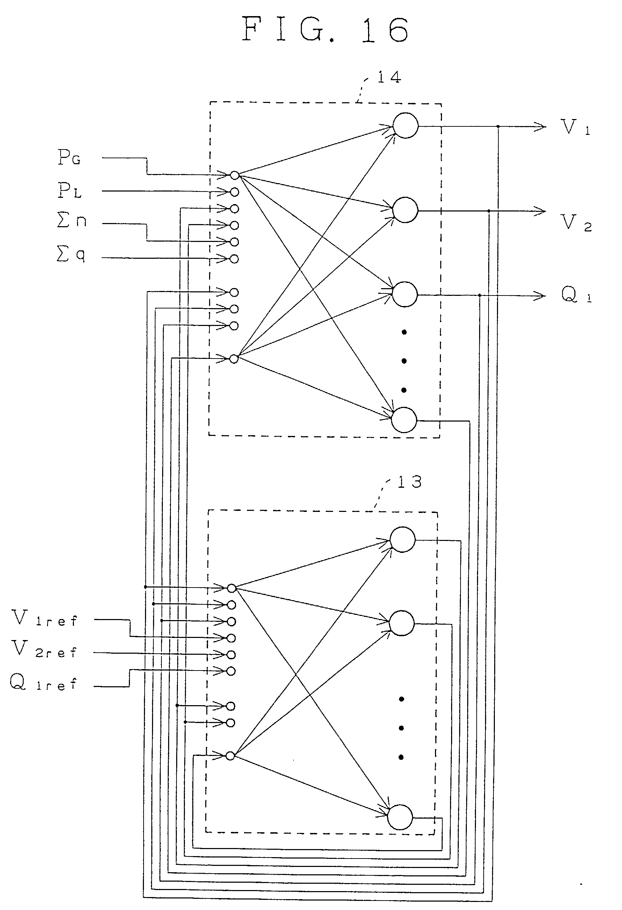

Control operations are executed in accordance with the procedure adopted by the first embodiment. To be more specific, at the first learning phase shown in Fig. 13(a), the neuro controller 13 and the neuro power-system simulator 14 learn dynamic characteristics of the voltage/reactive-power controller 11 and the power system 12 respectively. At the second learning phase shown in Fig. 13(b), the neuro controller 13 and the neuro power-system simulator 14 are connected to each other through common inputs and outputs as shown in Fig. 16. A whole recurrent neural network comprising the neuro controller 13 and the neuro power-system simulator 14 again go through a learning phase until the inputs and outputs of the joined neural network match each other, that is, until the values of the primary and secondary voltages $V_1$ and $V_2$ and the primary reactive power $Q_1$ of the transformer output by the neuro power-system simulator 14 as control results become equal to the target values $V_{1ref}$, $V_{2ref}$ and $Q_{1ref}$ of the primary and secondary voltages and the primary reactive power of the transformer. At that time, only the weights of connection among the neural nodes in the neuro controller 13 are adjusted. After the second learning phase has been completed, the neuro controller 13 is connected to the real power system 12 as shown in Fig. 13(c).

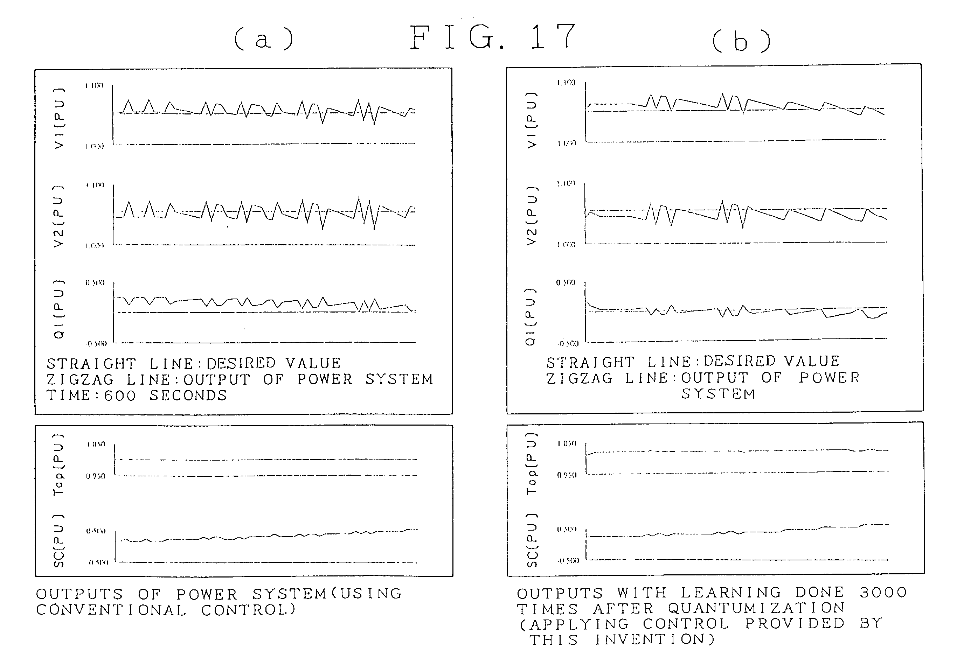

Fig. 17 shows comparison of control results produced by a control mechanism employing the neuro power-system simulator 14 substituting for a real power system and the neuro voltage/reactive-power controller 13, and a mechanism utilizing the conventional voltage/reactive-power controller 11. Fig. 17(a) and (b) show control results produced by the conventional controller 11 and the controller 13 provided by the present invention respectively. The conventional voltage/reactive-power controller 11 is based on the control plane shown in Fig. 1, operating either the tap changer or the phase adjusting facilities depending upon what position on the control plane the system state is located. On the other hand, it is obvious that the neuro voltage/reactive-power controller 13 controls the power system 12 using both the tap changer and the phase adjusting facilities.

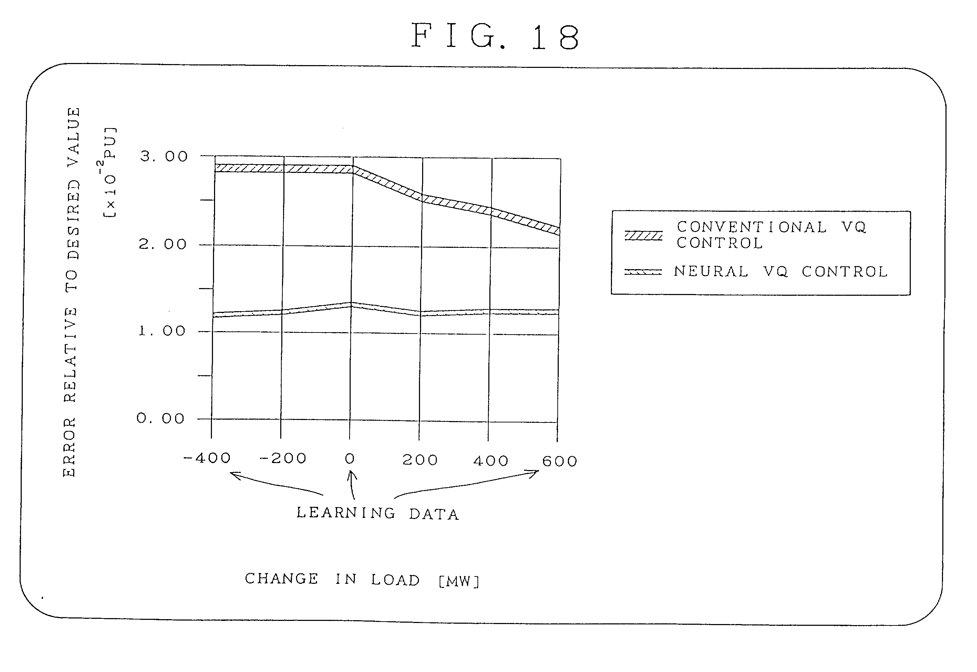

Fig. 18 shows error curves representing differences between the desired values and outputs for varying patterns of the load. One of the curve represents errors for the conventional controller whereas the other represents those for the controller using the neural network. Patterns -400, 0 and 600 of the load are used by the neuro controller 13 at the learning phase. The other patterns are non-learning data. It is clear from Fig. 18 that the control accuracy of the neuro controller 13 provided by the present invention is improved when compared to that of the conventional one.

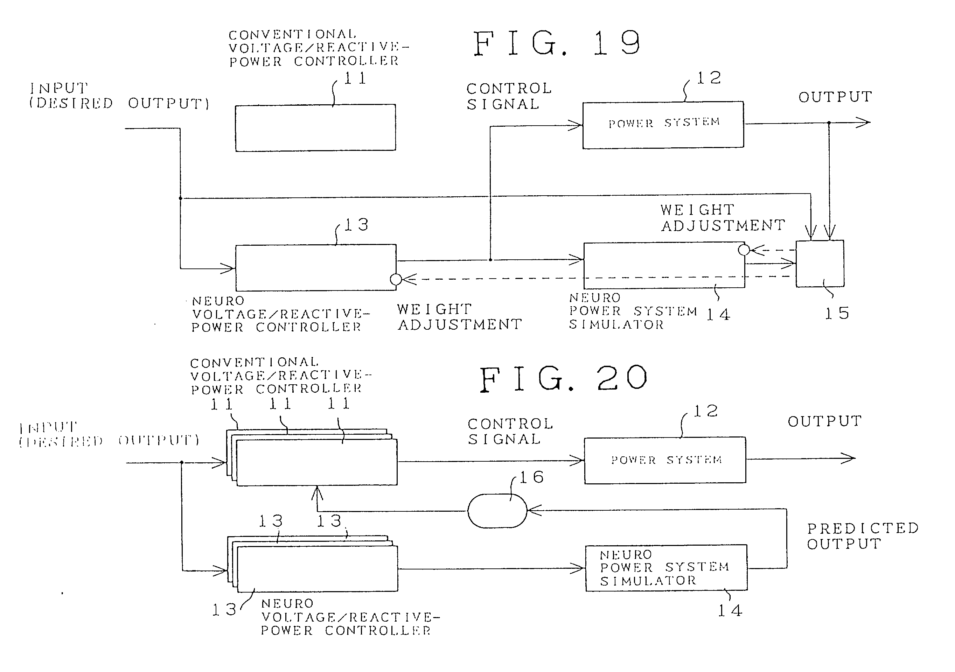

Fig. 19 is a conceptual diagram showing operation of a controller implemented by a seventh embodiment in accordance with the present invention. The configuration of the controller is identical with that of the sixth embodiment while its operation is the same as the second embodiment. That is, as the first and second learning phases are completed, the real power system 12 is controlled by the neuro controller 13. At that time, the neuro power-system simulator 14 are provided with the same external inputs as the real power system 12. The monitor 15 keeps track of the outputs of the real power system 12 and the neuro power-system simulator 14, i.e. the primary and secondary voltages and the primary reactive power of the transformer, comparing one to another. If the difference between them exceeds a predetermined value, the neuro controller 13 and the neuro power system simulator 14 are requested to go through a re-learning phase.

As described so far, desired and current values of the primary and secondary voltages and the primary reactive power of the transformer are set as external inputs to the neuro controller 13 as shown in Fig. 15. In addition, the primary and secondary voltages and the primary reactive power of the transformer are selected as outputs of the neuro power-system simulator 14 as shown in Fig. 14. It should be noted, however, that the following control schemes can also be adopted as well.

If it is desired to control only the transformer's primary and secondary voltages as is the case with the conventional technique, only the desired and current values of these voltages are supplied to the neuro controller 13 as its external inputs and only the transformer's primary and secondary voltages are selected as the outputs of the neuro power-system simulator 14.

As an alternative, only the secondary voltage and the primary reactive power of the transformer are used as control variables like another scheme of the conventional method. To be more specific, only desired and current values of the transformer's secondary voltage and primary reactive power are supplied to the neuro controller 13 as its external inputs and only the transformer's secondary voltage and primary reactive power are selected as the outputs of the neuro power-system simulator 14.

Fig. 20 is a conceptual diagram showing operation of an eighth embodiment implementing a look-ahead typed voltage/reactive-power controller in accordance with the present invention. The control system is configured to comprise a plurality of conventional voltage/reactive-power controller 11 based on different types of control logic, a plurality of neuro controller 13 learning the characteristics of the conventional voltage/reactive-power controller 11 and a neuro power-system simulator 14 learning the characteristics of a real power system 12.

The control system effectively takes advantage of the fact that an operation of the neural network after learning stage is executed at a very high speed. Control effects of each of the existing voltage/reactive-power controller 11 on a state of the real power system 12 are found in advance by simulation using the neuro controller 13 and the neuro power-system simulator 14 prior to the actual control. Based on results of the simulation, a switch/decision unit 16 selects a neuro controller 13 which has the most desirable effects, switching the connection of the real power system 12 to the selected controller 13. The connected neuro controller 13 then executes control operations on the real power system 12.

By applying the look-ahead control utilizing the high speed of the neural networks as such, the most effective controller and control variables which are useful in approaching the target values of the voltages and the reactive power of the transformer can thus be determined.

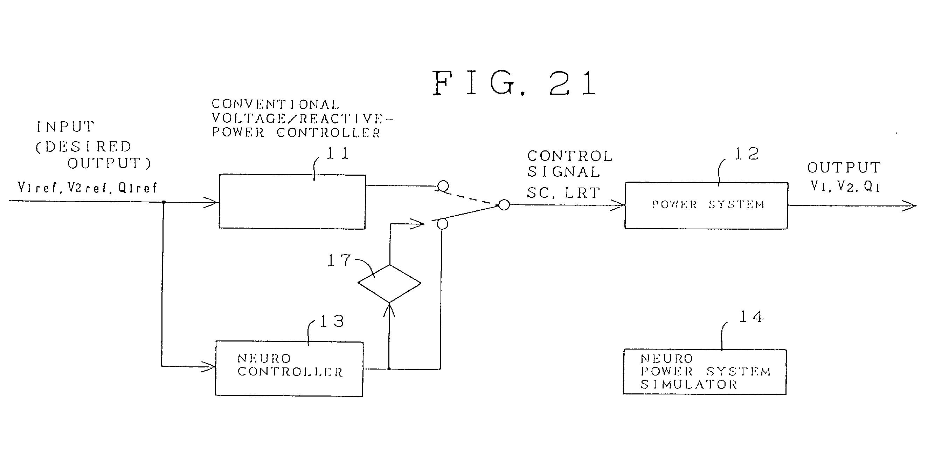

Fig. 21 is a conceptual diagram showing a nineth embodiment according to the present invention. At a stage where the neuro controller 13 having gone through a learning phase in accordance with the same procedure as the sixth embodiment controls the real power system 12, the conventional voltage/reactive-power controller 11 is also provided with the same input as the neuro controller 13. A switch/decision unit 17 monitors the control output of the neuro controller 13. If the control output goes beyond a predetermined range, the switch/decision unit 17 changes over the connection of the real power system 12 from the neuro controller 13 to the conventional voltage/reactive-power controller 11 so that the real power system 12 is controlled by the latter controller 11. By monitoring the control output of the neuro controller 13 as such, degradation of control performance caused by inputting a system state far beyond the scope of a learning process can thus be avoided.

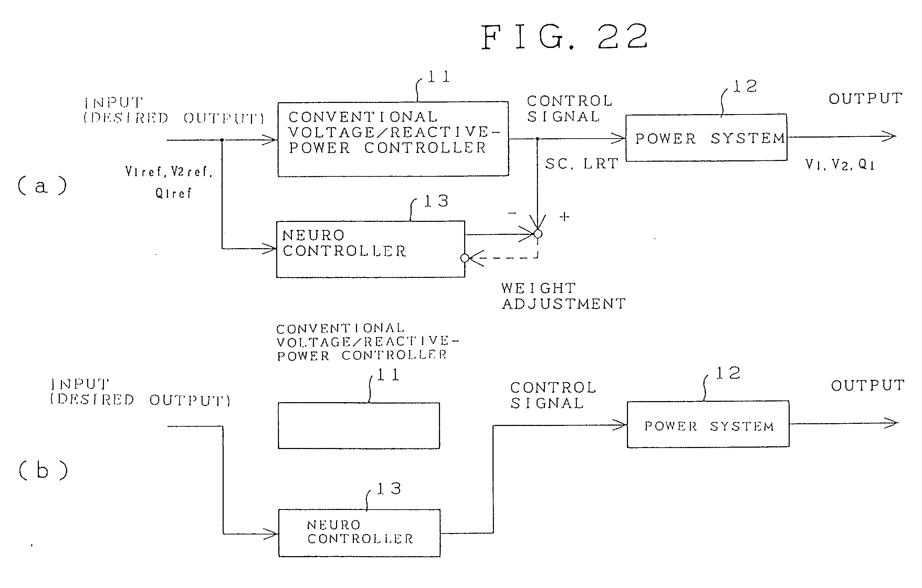

Next, a tenth embodiment according to the present invention is described. Fig. 22 are conceptual diagrams used for explaining the operation of a voltage/reactive-power controller 13 for controlling a power system by means of a neural network. Reference numeral 11 shown in the figure is the conventional voltage/reactive-power controller whereas reference numeral 12 denotes a power system controlled by the voltage/reactive-power controller 11. The neuro controller 13 is made up of a neural network for performing functions of the voltage/reactive-power controller 11. A recurrent neural network shown in Fig. 15 is a typical configuration of the neuro controller 13. As shown in the figure, inputs to the neuro controller 13 are reference values $V_{1ref}$, $V_{2ref}$ and $Q_{1ref}$ of the primary and secondary voltages and the primary reactive power of the transformer, and variables of the power system which are typically represented by current values $V_1$, $V_2$ and $Q_1$ of the primary and secondary voltages and the primary reactive power of the transformer respectively. Outputs of the neuro controller 13 are control signals (n) and (q) for moving up and down the tap of the tap-changer and closing and opening phase adjusting facilities SC and SHR respectively.

The principle of operation of these elements is the same as that of the fourth embodiment. First of all, the neuro voltage/reactive-power controller 13 learns dynamic characteristics of the conventional voltage/reactive-power controller 11 as shown in Fig. 22(a). The neuro voltage/reactive-power controller 13 then controls the real power system 12, replacing the conventional voltage/reactive-power controller 11 as shown in Fig. 22(b).

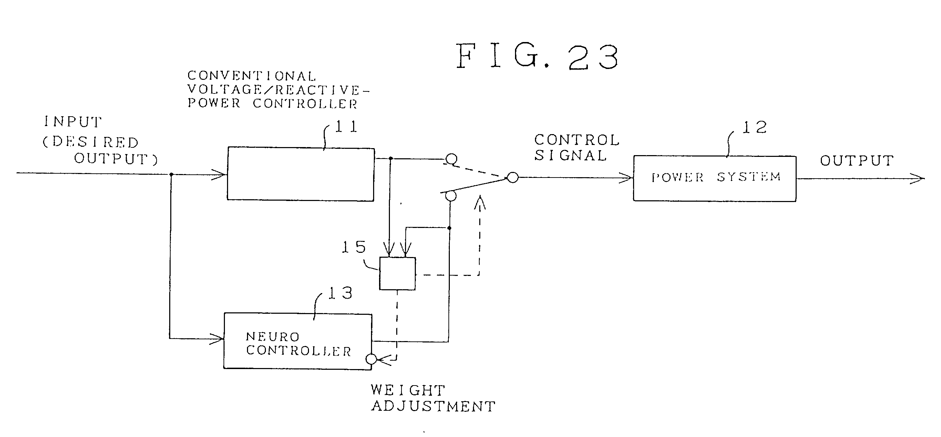

Fig. 23 is a conceptual diagram showing operation implemented by an eleventh embodiment in accordance with the present invention. The configuration of the apparatus is identical with that of the tenth embodiment while its operation is carried out in the same as the second embodiment. That is to say, while the neuro controller 13 is controlling the power system 12 after completing a learning phase, the same input is also supplied to the conventional voltage/reactive-power controller 11 as well. A monitor 15 keeps track of the outputs of the neuro controller 13 and the voltage/reactive-power controller 11. If the difference between the two outputs exceeds a predetermined value, the control of the power system 12 is switched from the neuro controller 13 to the voltage/reactive-power controller 11.

In this embodiment, target and current values of the primary and secondary voltages and the primary reactive power of the transformer are supplied to the neuro voltage/reactive-power controller 13 as external inputs. It should be noted, however, that only target and current values of the transformer's primary and secondary voltages can be supplied thereto as external inputs if it is desired to control these voltages only as is the case with the conventional technique.

As an alternative, only the secondary voltage and the primary reactive power of the transformer can be controlled like another scheme of the conventional method. To be more specific, only target and current values of the transformer's secondary voltage and primary reactive power are supplied to the neuro voltage/reactive-power controller 13 as external inputs.

As described earlier, the neuro controller and the neuro control-object simulator are each made up of a neural network. The weights of connection among neural nodes constituting the neural network of the neuro controller are adjusted to match dynamic characteristics of a real control object. Likewise, the weights of connection among neural nodes constituting the neural network of the neuro control-object simulator are adjusted to match dynamic characteristics of a conventional controller. Subsequently, by linking both the neural networks to each other and letting the neuro controller learn the characteristics of the conventional controller with the dynamic characteristics of the real control object taken into consideration, a control technique adaptable to any arbitrary control object can be implemented even if it is difficult to control the control object using the conventional control technique. In addition, the control technique is also applicable to a control object for which parameters of the conventional controller are difficult to set, or a control object for which the conventional controller yields unsatisfactory control results.

In addition, the neuro controller is made up of a neural network which adjusts the weights of connection among neural nodes constituting the neural network, until its characteristics match the dynamic characteristics of the conventional voltage/ reactive-power controller. The neuro controller can be configured so as to give the same characteristics as the conventional controller. In this case, the resulting configuration will be simpler than that of the conventional controller and, at the same time, it is also possible to increase its control speed.

Furthermore, the control technique utilizing neural networks is applied to the control of voltages and reactive power of a power system. The primary and secondary voltages and the primary reactive power of the transformer are thereby controlled to appropriate values at a higher degree of accuracy and at a higher speed than the conventional controller.

## Claims

1. A control method for controlling a control object by means of a neuro controller (3) having a neural network, said control method comprising the steps of:

a) connecting said neuro controller (3) in parallel to a control unit (1) for controlling said control object,

b) letting said neural network of said neuro controller (3) go through a first learning phase so as to make input-output relations of said neuro controller (3) match input-output relations of said control unit (1),

c) letting said neuro controller (3) control said control object,

characterized by

d) separate from steps (a) and (b), connecting a neuro control-object simulator (4) for simulating the control object in parallel to said control object and letting a neural network of the simulator (4) go through a learning phase so as to make input-output relations of said simulator (4) match input-output relations of said control object,

e) connecting the output of said neuro controller (3) after step (b) to the input of said neuro control-object simulator (4) after step (d),

f) letting said neural network of said neuro controller (3) go through a second learning phase so as to make the output of said neuro control-object simulator (4) match the input of said neuro controller (3),

wherein the step (c) of letting the neuro controller (3) control the control object is performed after the second learning phase in step (f).

2. A control method according to Claim 1, further comprising a step of comparing in a monitor (7) the output of said control object to the output of said neuro control-object simulator (4) after learning and letting said neuro controller (3) and said neuro control-object simulator (4) go through a re-learning phase if the difference between said outputs exceeds a predetermined value.

3. A voltage/reactive-power controller for controlling voltages and reactive power of a power system comprising:

a voltage/reactive-power control unit (11) having functions for controlling a power system;

a neuro control-object simulator (14) having a neural network and adapted to go through a first learning process when connected in parallel to said power system so as to make input-output relations of said neuro control-object simulator (14) agree with input-output relations of said power system; and

a neuro controller (13) having a neural network and adapted to go through a first learning process when connected in parallel to said control unit (11) so as to make input-output relations of said neuro controller (13) agree with input-output relations of said control unit (11),

said neuro controller (13) adapted to be connected to said simulator (14) and undergo a second learning process so as to make outputs of said neuro control-object simulator (14) match inputs of said neuro controller (13),

wherein said neuro controller (13) is adapted to control said power system after said second learning process has been completed.

4. A voltage/reactive-power controller according to Claim 3, wherein said control unit (11) has a power pattern which approximates the characteristics of a power system, wherein the control unit (11) controls said power system based on said pattern.

5. A voltage/reactive-power controller according to Claim 3 or 4, wherein said neuro control-object simulator (14) receives control signals from said neuro controller (13) even after said learning processes have been completed and a monitor (15) is further provided for comparing the output of said power system to the output of said neuro control-object simulator (14), wherein a request is made to said neuro controller (13) to undergo a re-learning process if the difference between said outputs exceeds a predetermined value.

6. A voltage/reactive-power controller according to any of Claims 3 to 5, further including a deciding unit (16) for keeping track of control signals of said neuro controller (13) and altering connection so that said power system is controlled by said control unit (11) if any of said control signals exceeds a predetermined value.

**Patentansprüche**

1. Steuerungsverfahren zum Steuern eines Steuerungsobjekts durch einen Neurocontroller (3), der ein Neuronennetz hat, wobei das Steuerungsverfahren die folgenden Schritte aufweist:

   a) Parallelverbinden des Neurocontrollers (3) mit einer Steuereinheit (1), um das Steuerungsobjekt zu steuern,

   b) Ermöglichen, daß das Neuronennetz des Neurocontrollers (3) durch eine erste Lernphase durchläuft, um Eingabe' Ausgabe-Beziehungen des Neurocontrollers (3) an Eingabe-Ausgabe-Beziehungen der Steuereinheit (1) anzugleichen,

   c) Ermöglichen, daß der Neurocontroller (3) das Steuerungsobjekt steuert,

   dadurch gekennzeichnet, daß,

   d) getrennt von den Schritten (a) und (b), ein Neuro-Steuerungsobjektsimulator (4) zum Simulieren des Steuerungsobjekts mit dem Steuerungsobjekt parallel verbunden wird und es ermöglicht wird, daß ein Neuronennetz des Simulators (4) eine Lernphase durchläuft, um Eingabe-Ausgabe-Beziehungen des Simulators (4) an Eingabe-Ausgabe-Beziehungen des Steuerungsobjekts anzugleichen,

   e) der Ausgang des Neurocontrollers (3) nach Schritt (b) mit dem Eingang des Neuro-Steuerungsobjektsimulators (4) nach Schritt (d) verbunden wird,

   f) ermöglicht wird, daß das Neuronennetz des Neurocontrollers (3) eine zweite Lernphase durchläuft, um den Ausgangswert des Neuro-Steuerungsobjektsimulators (4) an den Eingangswert des Neurocontrollers (3) anzugleichen,

   wobei der Schritt (c) des Ermöglichens, daß der Neurocontroller (3) das Steuerungsobjekt steuert, nach der zweiten Lernphase in Schritt (f) durchgeführt wird.

2. Steuerungsverfahren nach Anspruch 1, das ferner die folgenden Schritte aufweist: Vergleichen des Ausgangswertes des Steuerungsobjekts mit dem Ausgangswert des Neuro-Steuerungsobjektsimulator (4) in einem Monitor (7) nach dem Lernen, und Ermöglichen, daß der Neurocontroller (3) und der Neuro-Steuerungsobjektsimulator (4) eine Wiederholungslernphase durchlaufen, wenn die Differenz zwischen diesen Ausgangswerten einen vorbestimmten Wert überschreitet.

3. Spannungs/Blindleistungs-Steuerung zum Steuern von Spannungen und Blindleistung eines Stromversorgungsnetzes, wobei die Steuerung folgendes aufweist:

   eine Spannungs/Blindleistungs-Steuereinheit (11) mit Funktionen zum Steuern eines Stromversorgungsnetzes;

   einen Neuro-Steuerungsobjektsimulator (14), der ein Neuronennetz hat und ausgebildet ist, um einen ersten Lernprozeß zu durchlaufen, wenn er mit dem Stromversorgungsnetz parallelgeschaltet ist, um Eingabe-Ausgabe-Beziehungen des Neuro-Steuerungsobjektsimulators (14) mit Eingabe-Ausgabe-Beziehungen des Stromversorgungsnetzes in Übereinstimmung zu bringen; und

   einen Neurocontroller (13), der ein Neuronennetz hat und ausgebildet ist, um einen ersten Lernprozeß zu durchlaufen, wenn er mit der Steuereinheit (11) parallelgeschaltet ist, um Eingabe-Ausgabe-Beziehungen des Neurocontrollers (13) mit Eingabe-Ausgabe-Beziehungen der Steuereinheit (11) in Übereinstimmung zu bringen,

   wobei der Neurocontroller (13) ausgebildet ist, um mit dem Simulator (14) verbunden zu werden und einen zweiten Lernprozeß zu durchlaufen, um Ausgangswerte des Neuro-Steuerungsobjektsimulators (14) mit Eingangswerten des Neurocontrollers (13) in Übereinstimmung zu bringen,

wobei der Neurocontroller (13) ausgebildet ist, um das Stromversorgungsnetz zu steuern, nachdem der zweite Lernprozeß abgeschlossen worden ist.

4. Spannungs/Blindleistungs-Steuerung nach Anspruch 3, wobei die Steuereinheit (11) ein Leistungsmuster hat, das den Charakteristiken eines Stromversorgungsnetzes angenähert ist, wobei die Steuereinheit (11) das Stromversorgungsnetz auf der Basis des Musters steuert.

5. Spannungs/Blindleistungs-Steuerung nach Anspruch 3 oder 4, wobei der Neuro-Steuerungsobjektsimulator (14) Steuersignale von dem Neurocontroller (13) auch nach Beendigung der Lernprozesse empfängt und ferner ein Monitor (15) vorgesehen ist, um den Ausgangswert des Stromversorgungsnetzes mit dem Ausgangswert des Neuro-Steuerungsobjektsimulators (14) zu vergleichen, wobei der Neurocontroller (13) aufgefordert wird, einen Wiederholungslernprozeß zu durchlaufen, wenn die Differenz zwischen den Ausgangswerten einen vorbestimmten Wert überschreitet.

6. Spannungs/Blindleistungs-Steuerung nach einem Ansprüche 3 bis 5, die ferner eine Entscheidungseinheit (16) aufweist, um Steuersignale des Neurocontrollers (13) zu verfolgen und die Verbindung zu ändern, so daß das Stromversorgungsnetz von der Steuereinheit (11) gesteuert wird, wenn eines der Steuersignale einen vorbestimmten Wert überschreitet.

## Revendications

1. Procédé de commande pour commander un objet de commande au moyen d'un neuro-contrôleur (3) ayant un réseau de neurones, ledit procédé de commande comprenant les étapes de :

a) connecteur ledit neuro-contrôleur (3) en parallèle à une unité de commande (1) pour commander ledit objet de commande,
b) laisser ledit réseau de neurones dudit neuro-contrôleur (3) parcourir une première phase d'apprentissage, de manière à faire s'adapter des relations d'entrée-sortie dudit neuro-contrôleur (3) à des relations d'entrée-sortie de ladite unité de commande (1),
c) laisser ledit neuro-contrôleur (3) commander ledit objet de commande,

caractérisé par:

d) de manière détachée des étapes (a) et (b), relier un simulateur d'objet de neuro-commande (4) pour simuler l'objet de commande en parallèle audit objet de commande et laisser un réseau de neurones du simulateur (4) parcourir une phase d'apprentissage de manière à faire s'adapter des relations d'entrée-sortie dudit simulateur (4) à des relations dudit objet de commande,
e) connecter la sortie dudit neuro-contrôleur (3) après l'étape (b) à l'entrée dudit simulateur d'objet de neuro-commande (4) après l'étape (d),
f) laisser ledit réseau de neurones dudit neuro-contrôleur (3) parcourir une seconde phase d'apprentissage de manière à faire s'adapter la sortie dudit simulateur d'objet de neuro-commande (4) à l'entrée dudit neuro-contrôleur (3),

dans lequel l'étape (c) consistant à laisser le neuro-contrôleur (3) commander l'objet de commande est réalisée après la seconde phase d'apprentissage à l'étape (f).

2. Procédé de commande selon la revendication 1, comprenant en outre une étape de comparer dans un dispositif de suivi (7) la sortie dudit objet de commande à la sortie dudit simulateur d'objet de neuro-commande (4) après l'apprentissage et laisser ledit neuro-contrôleur (3) et ledit simulateur d'objet de neuro-commande (4) parcourir une phase de réapprentissage si la différence entre lesdites sorties excède une valeur prédéterminée.

3. Contrôleur de tension/puissance réactive pour commander en tension et en puissance réactive un système de puissance comprenant :

- une unité de commande de tension/puissance réactive 11 ayant des fonctions pour commander un système de puissance ;

- un simulateur d'objet de neuro-commande (14) ayant un réseau de neurones et adapté pour parcourir un premier processus d'apprentissage lorsque connecté en parallèle audit système de puissance de manière à faire coïncider des relations d'entrée-sortie dudit simulateur d'objet de neuro-commande (14) avec des relations d'entrée-sortie dudit système de puissance ; et

- un neuro-contrôleur (13) ayant un réseau de neurones et adapté pour parcourir un premier processus d'apprentissage lorsque connecté en parallèle à ladite unité de commande (11) de manière à faire coïncider des relations d'entrée-sortie dudit neuro-contrôleur (13) avec des relations d'entrée-sortie de ladite unité de commande (11),

ledit neuro-contrôleur (13) étant adapté pour être relié audit simulateur (14) et suivre un second processus d'apprentissage de manière à faire s'adapter des sorties dudit simulateur d'objet de neuro-commande (14) à des entrées dudit neuro-contrôleur (13),

dans lequel ledit neuro-contrôleur (13) est adapté pour commander ledit système de puissance après que ledit second processus d'apprentissage a été achevé.

4. Contrôleur de tension/puissance réactive selon la revendication 3, dans lequel ladite unité de commande (11) a un schéma de puissance qui approxime les caractéristiques d'un système de puissance, dans lequel l'unité de commande (11) commande ledit système de puissance sur la base dudit schéma.

5. Contrôleur de tension/puissance réactive selon la revendication 3 ou 4, dans lequel ledit simulateur d'objet de neuro-commande (14) reçoit des signaux de commande dudit neuro-contrôleur (13) même après que lesdits processus d'apprentissage ont été achevés et un dispositif de suivi (15) est en outre prévu pour comparer la sortie dudit système de puissance à la sortie dudit simulateur d'objet de neuro-commande (14), dans lequel une requête est faite vers ledit neuro-contrôleur (13) pour suivre un processus de réapprentissage si la différence entre lesdites sorties dépasse une valeur prédéterminée.

6. Contrôleur de tension/puissance réactive selon l'une quelconque des revendications 3 à 5, incluant en outre une unité de décision (16) pour garder trace des signaux de commande dudit neuro-contrôleur (13) et modifier la connexion, de sorte que ledit système de puissance est commandé par ladite unité de commande (11) si certains desdits signaux de commande dépassent une valeur prédéterminée.

EP 0 519 501 B1

# FIG. 1

V1 →

V2 →

Q1 →

V1SET →

V2SET →

Q1SET →

$V_{2SET}-V_2$

19

CUT OFF SC AND
ACTIVATE SHR

LOWER TAP

19

18

$Q_{1SET}-Q_1$
$-K_1(V_{1SET}-V_1)$

19

RAISE TAP

CUT OFF SHR AND
ACTIVATE SC

19

→ n

→ q

FIG. 2

# FIG. 3

INPUT
(DESIRED OUTPUT)

CONTROLLER ⟨1

CONTROL
SIGNAL

CONTROL
OBJECT ⟨2

OUTPUT

NEURO
CONTROLLER ⟨3

WEIGHT
ADJUSTMENT

⟨4

NEURO
CONTROL-OBJECT
SIMULATOR

− +

# FIG. 4

INPUT
(DESIRED OUTPUT)

CONTROLLER ⟨1

CONTROL
SIGNAL

CONTROL
OBJECT ⟨2

OUTPUT

NEURO
CONTROLLER ⟨3

NEURO
CONTROL-OBJECT
SIMULATOR
4 ⟨

EP 0 519 501 B1

# FIG. 5

# FIG. 6

INPUT TO NEURO CONTROL-OBJECT SIMULATOR

DESIRED OUTPUT OF NEURO CONTROL-OBJECT SIMULATOR

NEURAL-NETWORK'S OUTPUT (OUTPUT OF NEURO CONTROL-OBJECT SIMULATOR)

(a)

DESIRED OUTPUT

NEURAL-NETWORK'S OUTPUT

(b)

OUTPUT OF NEURO CONTROL-OBJECT SIMULATOR

DESIRED OUTPUT

CONTROL SIGNAL (OUTPUT OF NEURO CONTROL APPARATUS)

(c)

NEURAL-NETWORK'S OUTPUT

DESIRED OUTPUT

CONTROL SIGNAL

(d)

EP 0 519 501 B1

# FIG. 7

NEURO
CONTROL-OBJECT
SIMULATOR

OUTPUT

NEURO
CONTROLLER

INPUT
(DESIRED
  OUTPUT)

# FIG. 8

INPUT
(DESIRED OUTPUT)

CONTROLLER 1

CONTROL
SIGNAL

CONTROL
OBJECT 2

OUTPUT

NEURO
CONTROLLER 3

WEIGHT
ADJUSTMENT

WEIGHT
ADJUSTMENT

NEURO
CONTROL-OBJECT 4
SIMULATOR

7

# FIG. 9

INPUT
(DESIRED OUTPUT)

CONTROLLER 1 1 1

CONTROL
SIGNAL

CONTROL
OBJECT 2

OUTPUT

9

NEURO
CONTROLLER 3 3 3

NEURO
CONTROL-OBJECT 4
SIMULATOR

PREDICTED
OUTPUT

EP 0 519 501 B1

EP 0 519 501 B1

# FIG. 10

INPUT
(DESIRED OUTPUT)

CONTROLLER 1

CONTROL
SIGNAL

CONTROL
OBJECT 2

OUTPUT

NEURO
CONTROLLER 3

−   +

WEIGHT
ADJUSTMENT

# FIG. 11

INPUT
(DESIRED OUTPUT)

CONTROLLER 1

CONTROL
SIGNAL

CONTROL
OBJECT 2

OUTPUT

NEURO
CONTROLLER 3

EP 0 519 501 B1

FIG. 12

21

# FIG. 13

**(a)**

INPUT (DESIRED OUTPUT) → V1ref, V2ref, Q1ref → CONVENTIONAL VOLTAGE/REACTIVE-POWER CONTROLLER (11)

CONTROL SIGNAL SC, LRT → POWER SYSTEM (12) → OUTPUT V1, V2, Q1

NEURO VOLTAGE/REACTIVE-POWER CONTROLLER (13) — WEIGHT ADJUSTMENT

NEURO POWER SYSTEM SIMULATOR (14) — WEIGHT ADJUSTMENT

**(b)**

INPUT (DESIRED OUTPUT) → V1ref, V2ref, Q1ref

CONVENTIONAL VOLTAGE/REACTIVE-POWER CONTROLLER (11)

CONTROL SIGNAL SC, LRT → POWER SYSTEM (12) → OUTPUT V1, V2, Q1

NEURO VOLTAGE/REACTIVE-POWER CONTROLLER (13) — WEIGHT ADJUSTMENT

NEURO POWER SYSTEM SIMULATOR (14)

**(c)**

INPUT (DESIRED OUTPUT) → V1ref, V2ref, Q1ref

CONVENTIONAL VOLTAGE/REACTIVE-POWER CONTROLLER (11)

CONTROL SIGNAL SC, LRT → POWER SYSTEM (12) → OUTPUT V1, V2, Q1

NEURO VOLTAGE/REACTIVE-POWER CONTROLLER (13)

NEURO POWER SYSTEM SIMULATOR (14)

EP 0 519 501 B1

# FIG. 15

EXTERNAL
INPUTS

$V_1$
$V_2$
$Q_1$
$V_{1ref}$
$V_{2ref}$
$Q_{1ref}$

OUTPUT

n

q

# FIG. 14

EXTERNAL
INPUTS

$P_G$
$P_L$
n
q
$\Sigma n$
$\Sigma q$

OUTPUT

$V_1$

$V_2$

$Q_1$

# F I G. 16

(a) FIG. 17 (b)

STRAIGHT LINE:DESIRED VALUE
ZIGZAG LINE:OUTPUT OF POWER SYSTEM
TIME:600 SECONDS

STRAIGHT LINE:DESIRED VALUE
ZIGZAG LINE:OUTPUT OF POWER
SYSTEM

OUTPUTS OF POWER SYSTEM(USING
CONVENTIONAL CONTROL)

OUTPUTS WITH LEARNING DONE 3000
TIMES AFTER QUANTUMIZATION
(APPLYING CONTROL PROVIDED BY
THIS INVENTION)

# FIG. 18

Graph showing ERROR RELATIVE TO DESIRED VALUE [×10⁻²PU] on the vertical axis (0.00, 1.00, 2.00, 3.00) versus CHANGE IN LOAD [MW] on the horizontal axis (-400, -200, 0, 200, 400, 600). Legend: CONVENTIONAL VQ CONTROL; NEURAL VQ CONTROL. The range -400 to 600 is labeled LEARNING DATA.

EP 0 519 501 B1

# FIG. 19

CONVENTIONAL
VOLTAGE/REACTIVE-
POWER CONTROLLER
11

INPUT
(DESIRED OUTPUT)

CONTROL
SIGNAL

POWER SYSTEM
12

OUTPUT

WEIGHT
ADJUSTMENT

13

NEURO
POWER SYSTEM
SIMULATOR
14

15

NEURO
VOLTAGE/REACTIVE-
POWER CONTROLLER

WEIGHT
ADJUSTMENT

# FIG. 20

CONVENTIONAL
VOLTAGE/REACTIVE-
POWER CONTROLLER
11  11  11

INPUT
(DESIRED OUTPUT)

CONTROL
SIGNAL

POWER SYSTEM
12

OUTPUT

16

13  13

PREDICTED
OUTPUT

NEURO
POWER SYSTEM
SIMULATOR
14

13
NEURO
VOLTAGE/REACTIVE-
POWER CONTROLLER

# FIG. 21

# F I G. 22

(a)

INPUT
(DESIRED OUTPUT)

Viref, V2ref, Q1ref

11
CONVENTIONAL
VOLTAGE/REACTIVE-
POWER CONTROLLER

13
NEURO
CONTROLLER

CONTROL
SIGNAL

SC. LRT

−  +

WEIGHT
ADJUSTMENT

12
POWER SYSTEM

OUTPUT

V1, V2, Q1

(b)

INPUT
(DESIRED OUTPUT)

CONVENTIONAL
VOLTAGE/REACTIVE-
POWER CONTROLLER
11

13
NEURO
CONTROLLER

CONTROL
SIGNAL

12
POWER SYSTEM

OUTPUT

EP 0 519 501 B1

# FIG. 23

CONVENTIONAL
VOLTAGE/REACTIVE-
POWER CONTROLLER

INPUT
(DESIRED
OUTPUT)

11

15

13

NEURO
CONTROLLER

WEIGHT
ADJUSTMENT

CONTROL
SIGNAL

12

POWER SYSTEM

OUTPUT